# FASCICULE DE BREVET EUROPEEN

(11) **EP 3 885 567 B1**
(45) Date de publication et mention de la délivrance du brevet: **03.05.2023**
(21) Numéro de dépôt: 21163082.7
(22) Date de dépôt: 17.03.2021
(51) Int. Cl.: F02K 1/72, F02K 1/76

(54) **TURBORÉACTEUR DOUBLE FLUX COMPORTANT DES DÉFLECTEURS MOBILES**
ZWEISTRAHLIGES TRIEBWERK, DAS MOBILE LEITBLECHE UMFASST
DUAL-FLOW JET ENGINE COMPRISING MOBILE DEFLECTORS

(30) Priorité: 25.03.2020 FR 2002895
(43) Date de publication de la demande: 29.09.2021
(73) Titulaire: AIRBUS OPERATIONS, 31060 Toulouse Cedex 9 (FR)
(72) Inventeur: MENOU, Fabien, 31060 TOULOUSE (FR); FESQUET, Stéphanie, 31060 TOULOUSE (FR)
(74) Mandataire: Cabinet Le Guen Maillet

(56) Documents cités:
- EP-A2- 3 181 948
- FR-A1- 3 057 619
- US-A1- 2016 153 399
- US-B2- 10 309 343

## Description

### DOMAINE TECHNIQUE

La présente invention concerne un turboréacteur double flux pour aéronef comportant un capot mobile et des déflecteurs mobiles, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux comporte une soufflante qui est à l'avant du moteur et qui entraîne l'air extérieur de l'avant vers l'arrière du turboréacteur double flux. A l'arrière de la soufflante, l'air se divise en un flux primaire qui suit une veine primaire à l'intérieur du moteur et en un flux secondaire qui suit une veine secondaire entre le moteur et la nacelle.

La nacelle comporte une structure fixe sur laquelle sont fixés la soufflante et le moteur et certains capots fixes de la nacelle. La nacelle comporte également des capots mobiles qui se déplacent sur la structure fixe entre une position avancée et une position reculée. En position reculée qui correspond à une inversion de poussée du turboréacteur double flux, une fenêtre est ouverte entre la veine secondaire et l'extérieur pour évacuer l'air de la veine secondaire.

Pour guider au mieux l'air vers l'avant, des déflecteurs (également appelés « cascades ») sont fixés aux capots mobiles et se déplacent avec eux de manière à se positionner en travers de la fenêtre.

La longueur de déplacement des déflecteurs est égale à la longueur de déplacement du capot mobile auquel ils sont fixés, et dans certaines configurations, il peut être souhaitable d'avoir des longueurs différentes et il est donc souhaitable de trouver un mécanisme particulier.

Les documents US2016/153399 A1, US10309343 B2, EP3181948 A2 et FR3057619 A1 divulguent des inverseurs de poussée avec différents mécanismes d'ouverture de l'art antérieur.

### EXPOSÉ DE L'INVENTION

Un objet de la présente invention est de proposer un turboréacteur double flux pour aéronef comportant un capot mobile et des déflecteurs mobiles, dont les longueurs de déplacement sont différentes.

À cet effet, est proposé un turboréacteur double flux comportant un moteur avec un carter de soufflante et une nacelle entourant le moteur où une veine d'un flux secondaire est délimitée entre la nacelle et le moteur, ladite nacelle comportant :
- une structure fixe,
- un ensemble mobile avec un coulisseau mobile en translation sur la structure fixe et portant un capot mobile et un cadre mobile en translation sur la structure fixe et portant des déflecteurs, où l'ensemble mobile est mobile entre une position avancée dans laquelle le coulisseau est positionné de manière à ce que le capot mobile soit rapproché du carter de soufflante et une position reculée dans laquelle le coulisseau est positionné de manière à ce que le capot mobile soit éloigné du carter de soufflante pour définir entre eux une fenêtre ouverte entre la veine et l'extérieur de la nacelle à travers les déflecteurs,
- au moins un mécanisme de différenciation qui est configuré pour assurer une longueur du déplacement du coulisseau différente de la longueur du déplacement du cadre, et
- un ensemble d'actionneurs prévu pour assurer, à partir de la position avancée, un déplacement en translation du coulisseau jusqu'à la position reculée et inversement,
où chaque mécanisme de différenciation comporte un arbre monté sur la structure fixe et libre en rotation autour de son axe, un premier pignon et un deuxième pignon fixés audit arbre et coaxiaux avec ledit axe, une première crémaillère solidaire du coulisseau et qui engrène avec le premier pignon, une deuxième crémaillère solidaire du cadre et qui engrène avec le deuxième pignon, et le diamètre du premier pignon et le diamètre du deuxième pignon sont différents.

La mise en place d'un mécanisme de différenciation permet de régler la longueur du déplacement des déflecteurs par rapport à la longueur du déplacement du capot mobile.

Avantageusement, le diamètre du deuxième pignon est inférieur au diamètre du premier pignon.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur selon l'invention,
[Fig. 2] est une vue en perspective du turboréacteur selon l'invention,
[Fig. 3] est une vue de face d'un mécanisme de différenciation selon l'invention qui permet de différencier le déplacement des déflecteurs du déplacement du capot mobile, et
[Fig. 4] est une vue en perspective du mécanisme de différenciation de la Fig. 3.

### EXPOSÉ DÉTAILLÉ DE MODES DE RÉALISATION

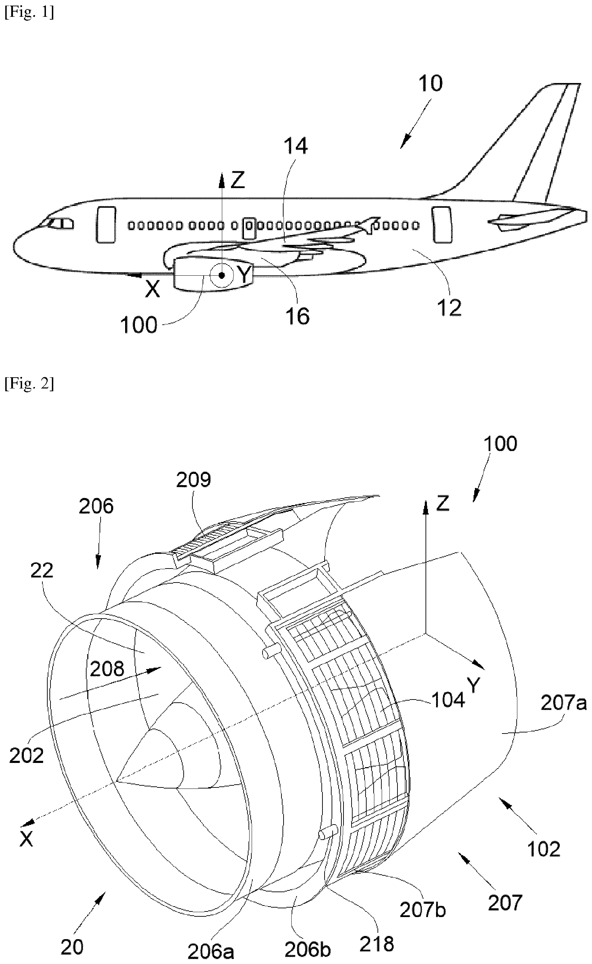

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

La Fig. 2 montre le turboréacteur double flux 100 qui présente une nacelle 102 et un moteur 20 qui est logé à l'intérieur de la nacelle 102 et qui comporte un carter de soufflante 206a. Le moteur 20 est matérialisé ici par son cône avant et sa soufflante 22 à l'intérieur de l'entrée d'air de la nacelle 102.

Dans la description qui suit, et par convention, on appelle X l'axe longitudinal du turboréacteur double flux 100 qui est parallèle à l'axe longitudinal de l'aéronef 10 orienté positivement dans le sens d'avancement de l'aéronef 10, on appelle Y l'axe transversal qui est horizontal lorsque l'aéronef est au sol, et Z l'axe vertical qui est vertical lorsque l'aéronef est au sol, ces trois axes X, Y et Z étant orthogonaux entre eux.

Le turboréacteur double flux 100 présente entre la nacelle 102 et le moteur 20 et à l'arrière de la soufflante 22, une veine 202 dans laquelle circule le flux secondaire 208 provenant de l'entrée d'air à travers la soufflante 22.

La nacelle 102 présente une structure fixe 206 qui est montée fixe sur le carter de soufflante 206a. La structure fixe 206 est composée d'un cadre avant 206b monté autour du carter de soufflante 206a et fixé à ce dernier.

La nacelle 102 présente un ensemble mobile 207 qui présente un coulisseau 207b qui prend ici la forme d'un cylindre à parois ajourées et un capot mobile 207a formant les parois de la tuyère et porté par le coulisseau 207b. Le capot mobile 207a est fixé à l'arrière du coulisseau 207b.

Le coulisseau 207b est monté mobile en translation selon une direction de translation globalement parallèle à l'axe longitudinal X sur la structure fixe 206 de la nacelle 102.

L'ensemble mobile 207 est mobile entre une position avancée et une position reculée et inversement. En position avancée, le coulisseau 207b est positionné le plus en avant possible de manière à ce que le capot mobile 207a soit rapproché du carter de soufflante 206a. En position reculée, le coulisseau 207b est positionné le plus en arrière possible de manière à ce que le capot mobile 207a soit éloigné du carter de soufflante 206a.

En position avancée, le capot mobile 207a et le carter de soufflante 206a se prolongent de manière à définir la surface extérieure de la veine 202.

En position reculée, le capot mobile 207a et le carter de soufflante 206a sont à distance et définissent entre eux une fenêtre ouverte entre la veine 202 et l'extérieur de la nacelle 102 ainsi l'air du flux secondaire 208 traverse la fenêtre pour rejoindre l'extérieur de la nacelle 102.

Le carter de soufflante 206a délimite l'avant de la fenêtre et le capot mobile 207a délimite l'arrière de la fenêtre.

Dans le mode de réalisation de l'invention, présenté à la Fig. 2, la nacelle 102 comporte une pluralité de volets inverseurs 104 répartis sur la périphérie de la nacelle 102 en fonction de l'ouverture angulaire de la fenêtre autour de l'axe longitudinal X.

Chaque volet inverseur 104 est monté ici articulé sur le coulisseau 207b entre une position déployée et une position escamotée et inversement.

La position déployée est adoptée lorsque le coulisseau 207b est en position reculée. La position escamotée est adoptée lorsque le coulisseau 207b est en position avancée.

En position déployée, le volet inverseur 104 est positionné en travers de la veine 202 pour bloquer l'écoulement du flux secondaire 208 et le diriger vers la fenêtre. En position escamotée, le volet inverseur 104 est hors de la veine 202 et ne gêne pas la progression du flux secondaire 208 entre l'avant et l'arrière.

Le déplacement de chaque volet inverseur 104 de la position escamotée à la position déployée et inversement est réalisé par tout mécanisme approprié et connu de l'homme du métier et comportant par exemple des tringles, crémaillères, actionneurs.... Ledit mécanisme est adapté pour faire passer les volets inverseurs 104 de la position escamotée à la position déployée lorsque le coulisseau 207b passe de la position avancée à la position reculée et inversement.

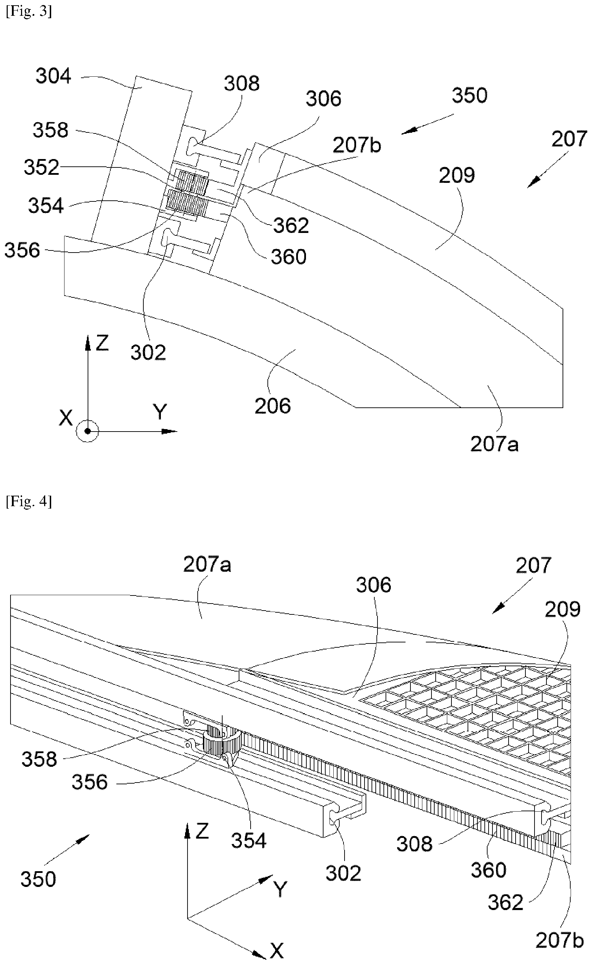

Comme le montrent les Figs. 3 et 4, le coulisseau 207b est guidé par rapport à la structure fixe 206 par un premier système de guidage constitué ici d'un ensemble de glissières 302 qui sont fixées ici à une poutre 12 heures 304 et à une poutre 6 heures non vues de la structure fixe 206. Bien sûr tout autre système de guidage est possible, comme par exemple un rail.

Le déplacement du coulisseau 207b le long de la structure fixe 206 est commandé par un système d'actionnement constitué ici d'actionneurs 218 et commandé par une unité de contrôle, par exemple du type processeur, qui commande les déplacements dans un sens ou dans l'autre selon les besoins de l'aéronef 10. Chaque actionneur 218 est ainsi prévu pour assurer, à partir de la position avancée et fermée, un déplacement en translation du coulisseau 207b jusqu'à la position reculée, et inversement. Chaque actionneur 218 peut prendre par exemple la forme d'un vérin à tige télescopique à double effet ou d'un moteur engrenant avec une crémaillère.

L'ensemble mobile 207a comporte également un cadre 306 et un ensemble de déflecteurs 209 fixé sur le cadre 306 qui est également mobile entre une position avancée et une position reculée et inversement et correspondant aux positions avancée et reculée du coulisseau 207b. Le cadre 306 est monté mobile sur la structure fixe 206, également ici entre la poutre 12 heures 304 et la poutre 6 heures.

Le cadre 306 est guidé par rapport à la structure fixe 206 par un deuxième système de guidage constitué ici d'un ensemble de glissières 308. Bien sûr, tout autre système de guidage est possible, comme par exemple un rail.

En position avancée, les déflecteurs 209 sont cachés par le capot mobile 207a ou par le carter de soufflante 206a. En position reculée, les déflecteurs 209 sont positionnés en travers de la fenêtre pour guider l'air du flux secondaire 208 vers l'extérieur.

Pour assurer un déplacement différent entre le coulisseau 207b et le cadre 306, la nacelle 102 comporte un mécanisme de différenciation 350 qui est configuré pour assurer une longueur du déplacement du coulisseau 207b différente de la longueur du déplacement du cadre 306, et en particulier, une longueur du déplacement du coulisseau 207b plus longue que la longueur du déplacement du cadre 306.

Sur les Figs. 3 et 4, un seul mécanisme de différenciation 350 est représenté, mais pour une plus grande stabilité, il y a un mécanisme de différenciation 350 à chaque extrémité du coulisseau 207b, c'est-à-dire ici un au niveau de la poutre 12 heures 304 et un au niveau de la poutre 6 heures.

Ainsi, lors du passage de la position avancée à la position reculée, le coulisseau 207b et donc le capot mobile 207a, recule plus vers l'arrière que le cadre 306 et donc les déflecteurs 209. A l'inverse, lors du passage de la position reculée à la position avancée, le coulisseau 207b et donc le capot mobile 207a, avance plus vers l'avant que le cadre 306 et donc les déflecteurs 209, ce qui permet un gain de place pour stocker les déflecteurs en position avancée.

Dans le mode de réalisation de l'invention présenté sur les Figs. 3 et 4, le mécanisme de différenciation 350 comporte un arbre 352 monté sur la structure fixe 206 et libre en rotation autour de son axe qui est orienté radialement par rapport à l'axe longitudinal X et qui est appelé « axe de rotation ».

Le maintien en position de l'arbre 352 est assuré ici par deux équerres 354 fixées à la structure fixe 206 et plus particulièrement ici aux poutres 304. Ces équerres 354 autorisant la rotation de l'arbre 352.

Le mécanisme de différenciation 350 comporte également un premier pignon 356 et un deuxième pignon 358 qui sont fixés audit arbre 352 et sont coaxiaux avec l'axe de rotation. Les deux pignons 356 et 358 tournent ainsi à la même vitesse.

Le mécanisme de différenciation 350 comporte également une première crémaillère 360 solidaire du coulisseau 207b et qui engrène avec le premier pignon 356.

Le mécanisme de différenciation 350 comporte également une deuxième crémaillère 362 solidaire du cadre 306 et qui engrène avec le deuxième pignon 358.

La première crémaillère 360 et la deuxième crémaillère 362 sont donc parallèles.

Pour générer des courses différentes du coulisseau 207b et du cadre 306, le diamètre du premier pignon 356 et le diamètre du deuxième pignon 358 sont différents.

Bien sûr, pour éviter que l'un des pignons 356, 358 n'engrène plus avec la crémaillère 360, 362, les longueurs desdites crémaillères 360 et 362 sont adaptées, et en particulier la crémaillère 360, qui aura le plus grand déplacement sera la plus longue.

Selon un mode de réalisation particulier, le diamètre du deuxième pignon 358 est inférieur au diamètre du premier pignon 356. Selon un mode de réalisation particulier, pour un déplacement de 1070 mm du coulisseau 207b et pour un déplacement de 781 mm du cadre 306, le diamètre du deuxième pignon 358 est de 48 mm et le diamètre du premier pignon 356 est de 65,8 mm.

## Revendications

1. Turboréacteur double flux (100) comportant un moteur (20) avec un carter de soufflante (206a) et une nacelle (102) entourant le moteur (20) où une veine (202) d'un flux secondaire (208) est délimitée entre la nacelle (102) et le moteur (20), ladite nacelle (102) comportant :
- une structure fixe (206),
- un ensemble mobile (207) avec un coulisseau (207b) mobile en translation sur la structure fixe (206) et portant un capot mobile (207a) et un cadre (306) mobile en translation sur la structure fixe (206) et portant des déflecteurs (209), où l'ensemble mobile (207) est mobile entre une position avancée dans laquelle le coulisseau (207b) est positionné de manière à ce que le capot mobile (207a) soit rapproché du carter de soufflante (206a) et une position reculée dans laquelle le coulisseau (207b) est positionné de manière à ce que le capot mobile (207a) soit éloigné du carter de soufflante (206a) pour définir entre eux une fenêtre ouverte entre la veine (202) et l'extérieur de la nacelle (102) à travers les déflecteurs (209),
- au moins un mécanisme de différenciation (350) qui est configuré pour assurer une longueur du déplacement du coulisseau (207b) différente de la longueur du déplacement du cadre (306), et
- un ensemble d'actionneurs (218) prévu pour assurer, à partir de la position avancée, un déplacement en translation du coulisseau (207b) jusqu' à la position reculée et inversement, où chaque mécanisme de différenciation (350) comporte un arbre (352) monté sur la structure fixe (206) et libre en rotation autour de son axe, un premier pignon (356) et un deuxième pignon (358) fixés audit arbre (352) et coaxiaux avec ledit axe, une première crémaillère (360) solidaire du coulisseau (207b) et qui engrène avec le premier pignon (356), une deuxième crémaillère (362) solidaire du cadre (306) et qui engrène avec le deuxième pignon (358), et où le diamètre du premier pignon (356) et le diamètre du deuxième pignon (358) sont différents.

2. Turboréacteur double flux (100) selon la revendication 1, **caractérisé en ce que** le diamètre du deuxième pignon (358) est inférieur au diamètre du premier pignon (356).

3. Aéronef (10) comportant au moins un turboréacteur double flux (100) selon l'une des revendications précédentes.

## Patentansprüche

1. Mantelstromtriebwerk (100), welches ein Kerntriebwerk (20) mit einem Gebläsegehäuse (206a) und eine Gondel (102), die das Kerntriebwerk (20) umgibt, umfasst, wobei ein Strömungskanal (202) eines Sekundärstroms (208) zwischen der Gondel (102) und dem Kerntriebwerk (20) begrenzt wird, wobei die Gondel (102) umfasst:
- eine ortsfeste Struktur (206),
- eine bewegliche Anordnung (207) mit einem Gleitstück (207b), das auf der ortsfesten Struktur (206) translatorisch beweglich ist und eine bewegliche Haube (207a) trägt, und einem Rahmen (306), der auf der ortsfesten Struktur (206) translatorisch beweglich ist und Leitbleche (209) trägt, wobei die bewegliche Anordnung (207) beweglich ist zwischen einer vorgeschobenen Position, in welcher das Gleitstück (207b) so positioniert ist, dass die bewegliche Haube (207a) dem Gebläsegehäuse (206a) genähert ist, und einer zurückgezogenen Position, in welcher das Gleitstück (207b) so positioniert ist, dass die bewegliche Haube (207a) von dem Gebläsegehäuse (206a) entfernt ist, um zwischen ihnen ein zwischen dem Strömungskanal (202) und der Außenseite der Gondel (102) geöffnetes Fenster durch die Leitbleche (209) hindurch zu definieren,
- wenigstens einen Differenzierungsmechanismus (350), welcher dafür ausgelegt ist, eine Länge der Bewegung des Gleitstücks (207b) sicherzustellen, die von der Länge der Bewegung des Rahmens (306) verschieden ist, und
- eine Anordnung von Stellantrieben (218), die dafür vorgesehen ist, von der vorgeschobenen Position aus eine translatorische Bewegung des Gleitstücks (207b) bis zur zurückgezogenen Position und umgekehrt sicherzustellen, wobei jeder Differenzierungsmechanismus (350) eine Welle (352), die auf der ortsfesten Struktur (206) gelagert und um ihre Achse frei drehbar ist, ein erstes Ritzel (356) und ein zweites Ritzel (358), die auf der Welle (352) befestigt und koaxial mit der Achse sind, eine erste Zahnstange (360), die mit dem Gleitstück (207b) fest verbunden ist und mit dem ersten Ritzel (356) in Eingriff steht, eine zweite Zahnstange (362), die mit dem Rahmen (306) fest verbunden ist und mit dem zweiten Ritzel (358) in Eingriff steht, und wobei der Durchmesser des ersten Ritzels (356) und der Durchmesser des zweiten Ritzels (358) verschieden sind, umfasst.

2. Mantelstromtriebwerk (100) nach Anspruch 1, **dadurch gekennzeichnet, dass** der Durchmesser des zweiten Ritzels (358) kleiner als der Durchmesser des ersten Ritzels (356) ist.

3. Luftfahrzeug (10), welches wenigstens ein Mantelstromtriebwerk (100) nach einem der Ansprüche umfasst.

## Claims

1. Bypass turbofan engine (100) comprising an engine (20) with a fan casing (206a) and a nacelle (102) surrounding the engine (20) in which a flow path (202) for a secondary flow (208) is delimited between the nacelle (102) and the engine (20), said nacelle (102) comprising:
- a fixed structure (206),
- a mobile assembly (207) with a slide (207b) capable of translational movement on the fixed structure (206) and bearing a mobile cowl (207a) and a frame (306) capable of translational movement on the fixed structure (206) and bearing deflectors (209), in which the mobile assembly (207) is able to move between a forward position in which the slide (207b) is positioned in such a way that the mobile cowl (207a) is close to the fan casing (206a) and a backward position in which the slide (207b) is positioned in such a way that the mobile cowl (207a) is distanced from the fan casing (206a) in order between them to define an open passage between the flow path (202) and the outside of the nacelle (102) through the deflectors (209),
- at least one differentiation mechanism (350) which is configured in such a way as to ensure a length of travel of the slide (207b) that is different from the length of travel of the frame (306), and
- a set of actuators (218) designed to ensure, starting from the forward position, a translational travel of the slide (207b) as far as the backward position and vice versa,
in which each differentiation mechanism (350) comprises a shaft (352) mounted on the fixed structure (206) and free to rotate about its axis, a first pinion (356) and a second pinion (358) which are fixed to said shaft (352) and coaxial with said axis, a first rack (360) solid with the slide (207b) and meshing with the first pinion (356), a second rack (362) solid with the frame (306) and meshing with the second pinion (358), and in which the diameter of the first pinion (356) and the diameter of the second pinion (358) are different.

2. Bypass turbofan engine (100) according to Claim 1, **characterized in that** the diameter of the second pinion (358) is smaller than the diameter of the first pinion (356).

3. Aircraft (10) comprising at least one bypass turbofan engine (100) according to one of the preceding claims.
